# EUROPEAN PATENT APPLICATION

(11) **EP 4 230 715 A1**
(43) Date of publication of application: **23.08.2023**
(21) Application number: 21880213.0
(22) Date of filing: 15.10.2021
(51) Int. Cl.: C12C 12/04, C12G 3/04, A23L 2/00, A23L 2/38, A23L 2/52

(54) **CONTAINER-PACKED CARBONATED BEVERAGE**

(30) Priority: 15.10.2020 JP 2020173681
(71) Applicant: Suntory Holdings Limited, Osaka 530-8203 (JP)
(72) Inventor: SHIMMURA, Anna, Fuchu-shi, Tokyo 183-8533 (JP); KATO, Yuichi, Fuchu-shi, Tokyo 183-8533 (JP)
(74) Representative: Vossius & Partner Patentanwälte Rechtsanwälte mbB
(86) International application number: PCT/JP2021/038170
(87) International publication number: WO 2022/080478

(57) **Abstract**

A container-packed carbonated beverage, in which the content of ethanol is less than 1.0 (v/v)%, the content of carbon dioxide gas is 0.10 to 5.0 kg/cm², and the content of 2-methyl-2-pentenoic acid is 30 to 10500 ppb by mass.

## Description

### Technical Field

The present invention relates to a container-packed carbonated beverage.

### Background Art

In a common non-alcoholic beer, malts and hops are used as main raw materials. By using malts as raw materials, a beverage having a malt-derived taste (i.e. *umami*) and a rich taste can be produced. On the other hand, by using hops as raw materials, a beverage having a rich flavor that is based on hop-specific bitterness, astringency, or other flavors can be produced.

In recent years, it is said that consumers who do not like hop-derived bitterness or astringency have increased, and thus that the consumption of beer-taste beverages has made a little progress. The development of beer-taste beverages, in which hops are not used as raw materials, has been promoted (for example, Patent Publication (Kokai) No. 2017-6077 A (Patent Literature 1)). However, there are some non-alcoholic beers of not using hops, in which the taste of malts stands out and thus, a bulky and heavy taste is felt.

Hence, by increasing the content of carbon dioxide gas, the stimulus of a beverage to the throat can be strengthened, and a light taste can be provided to the beverage. However, the content of carbon dioxide gas is restricted by the strength of a packaging material. In particular, since the internal pressure of a packaging material increases in a sterilization step in the production of beverages, the content of carbon dioxide gas may be largely restricted.

Moreover, even in the case of carbonated beverages that do not contain alcohols other than non-alcoholic beers, although stimulation to the throat is intended to be enhanced, the strength of a packaging material has a certain limit, and thus, the content of carbon dioxide gas may be restricted.

### Citation List

### Patent Literature

Patent Literature 1: Patent Publication (Kokai) No. 2017-6077 A

### Summary of Invention

### Technical Problem

It has been desired to develop a carbonated beverage that gives a stimulus to the throat, while suppressing the content of carbon dioxide gas. Moreover, it has been desired to develop a carbonated beverage, in which astringency as an unsuitable aftertaste is suppressed.

### Solution to Problem

The present invention provides a container-packed carbonated beverage, in which the content of ethanol is less than 1.0 (v/v)%, the content of carbon dioxide gas is 0.10 to 5.0 kg/cm², and the content of 2-methyl-2-pentenoic acid is 30 to 10500 ppb by mass.

The present invention includes the inventions of the following embodiments.
[1] A container-packed carbonated beverage, in which the content of ethanol is less than 1.0 (v/v)%, the content of carbon dioxide gas is 0.10 to 5.0 kg/cm², and the content of 2-methyl-2-pentenoic acid is 30 to 10500 ppb by mass.
[2] The container-packed carbonated beverage according to the above [1], comprising 800 ppm by mass or less of lactic acid.
[3] The container-packed carbonated beverage according to the above [1] or [2], comprising 500 ppm by mass of phosphoric acid.
[4] The container-packed carbonated beverage according to any one of the above [1] to [3], wherein the pH is pH 2.5 to 4.5.
[5] The container-packed carbonated beverage according to any one of the above [1] to [4], wherein the carbonated beverage is a beer-taste beverage.
[6] The container-packed carbonated beverage according to any one of the above [1] to [4], wherein the carbonated beverage is a non-alcoholic beer-taste beverage.

### Advantageous Effects of Invention

According to a preferred embodiment of the present invention, provided is a container-packed carbonated beverage that gives a stimulus to the throat, while suppressing the content of carbon dioxide gas. Moreover, also provided is a container-packed carbonated beverage, in which astringency as an unsuitable aftertaste is suppressed.

### Description of Embodiments

### 1. Carbonated beverage

In the container-packed carbonated beverage of the present invention, the content of ethanol is less than 1.0 (v/v)%, the content of carbon dioxide gas is 0.10 to 5.0 kg/cm², and the content of 2-methyl-2-pentenoic acid is 30 to 10500 ppb by mass.

In the present invention, the carbonated beverage means a beverage comprising carbon dioxide gas (carbon dioxide). Such carbon dioxide gas can be provided into a beverage according to a method that is generally known to those skilled in the art. For example, carbon dioxide may be dissolved in a beverage under increased pressure, or using a mixer such as a carbonator, carbon dioxide may be mixed with a beverage in a pipe, but the method of providing carbon dioxide to a beverage is not limited thereto. Otherwise, a beverage is sprayed into a tank filled with carbon dioxide, so that the carbon dioxide may be absorbed into the beverage, or a beverage may be mixed with carbonated water.

The carbonated beverage of the present invention is not particularly limited, and examples of the present carbonated beverage may include beer-taste beverages, carbonated water, carbonated beverages (for example, cider and *Ramune,* etc.) to which a flavor such as lemon, lemon lime, lime, orange, grapefruit, or grape is imparted, cola drinks, ginger ale, fruit juice carbonated beverages, milk carbonated beverages, sour drinks, tonic water, flavored water, and mineral water. In addition, the carbonated beverage of the present invention is preferably a beer-taste beverage.

In the present description, the "beer-taste beverage" means a carbonated beverage having a beer-like flavor. Since the content of ethanol is less than 1.0 (v/v)% in the carbonated beverage of the present invention, the beer-taste beverage used herein is a non-alcoholic beer-taste beverage, in which the content of ethanol is less than 1.0 (v/v)%.

The "beer-taste beverage" includes: not only a beer that is a malt-fermented beverage obtained by using malts, hops and water as raw materials and fermenting these raw materials using yeasts; but also a carbonated beverage having a beer flavor, in which malts or hops are not used as raw materials. The beer-taste beverage is not limited to a fermented beverage that is produced by adding a yeast to a pre-fermentation solution comprising a wort and components necessary for fermentation and then performing fermentation, but the beer-taste beverage includes fermented carbonated beverages and non-fermented carbonated beverage, to which beer flavors (i.e. flavors that evoke a beer-like flavor) including esters, higher alcohols and lactones, such as, for example, isoamyl acetate, ethyl acetate, n-propanol, isobutanol, acetaldehyde, ethyl caproate, ethyl caprylate, isoamyl propionate, linalool, geraniol, citral, 4-vinylguaiacol (4-VG), 4-methyl-3-pentenoic acid, 2-methyl-2-pentenoic acid, 1,4-cineole, 1,8-cineole, 2,3-diethyl-5-methylpyrazine, γ-decanolactone, γ-undecalactone, ethyl hexanoate, ethyl 2-methylbutyrate, ethyl n-butyrate, myrcene, methional, furfural, and furaneol, are added. The non-alcoholic beer-taste beverage may be a fermented beverage, in which, in the production process thereof, alcohol obtained after the removal of alcohol that is generated in a fermentation step performed using a yeast(s) (a top fermentation yeast and/or a bottom fermentation yeast) is less than 1 (v/v%). The non-alcoholic beer-taste beverage may also be a fermented beverage obtained by terminating the fermentation so that the alcohol becomes less than 1 (v/v%). Otherwise, the non-alcoholic beer-taste beverage may also be a fermented beverage obtained by dilution with water and the like so that the alcohol becomes less than 1 (v/v%). Upon termination of the fermentation, the fermentation is preferably terminated, so that off-flavors such as hydrogen sulfide, diacetyl, 2,3-pentanedione, and acetaldehyde become the threshold or less. However, it is not always necessary to set the off flavors to be the threshold or less. If the off-flavors such as hydrogen sulfide, diacetyl, 2,3-pentanedione, and acetaldehyde are fused with the flavor of the beer-taste beverage to obtain a favorable flavor, the concentration of the off-flavors is not limited. The non-alcoholic beer-taste beverage may further be a non-fermented beverage prepared without being subjected to a fermentation step.

Moreover, the container-packed carbonated beverage according to one embodiment of the present invention may be a fermented beer-taste beverage produced by performing a fermentation step using a yeast, or may also be a non-fermented beer-taste beverage produced without performing such a fermentation step. The fermented beer-taste beverage may be a top-fermented beer-taste beverage brewed by performing a fermentation step using a top fermentation yeast, or may also be a bottom-fermented beer-taste beverage brewed by performing a fermentation step using a bottom fermentation yeast. For such fermentation, a yeast (Saccharomyces) or a wild-type yeast (Brettanomyces, etc.), which generates alcohol, may be used. Otherwise, a yeast (Saccharomyces, etc.), a wild-type yeast (Brettanomyces, etc.), bacteria performing lactic acid fermentation or gluconic acid fermentation, and the like may also be used for fermentation.

In addition, the beer-taste beverage according to one embodiment of the present invention may be either a beer-taste beverage comprising a malt, in which a malt is used as a raw material, or a beer-taste beverage not comprising a malt, in which a malt is not used as a raw material. A beer-taste beverage comprising a malt is preferable, and a beer-taste beverage comprising a barley malt is more preferable.

Among others, the container-packed carbonated beverage according to one embodiment of the present invention is preferably a non-alcoholic beer-taste beverage that does not contain alcohol. Besides, the container-packed carbonated beverage according to one embodiment of the present invention may be either a hop component-non-containing non-alcoholic beer-taste beverage that does not substantially contain components derived from hops, or a hop component-containing non-alcoholic beer-taste beverage that contains components derived from hops.

Examples of the forms of hops used in one embodiment of the present invention may include pelletized hops, powdered hops, and hop extracts. In addition, the used hops may also be hop-processed products such as isomerized hops and reduced hops.

Since the content of carbon dioxide gas is 0.10 to 5.0 kg/cm² and the content of 2-methyl-2-pentenoic acid is 30 to 10500 ppb by mass in the carbonated beverage of the present invention, a carbonated beverage, in which favorable stimulation is given to the throat and astringency as an aftertaste unsuitable for carbonated beverages is suppressed, can be obtained.

In the present description, the phrase "not substantially contain components derived from hops" means that both hops and components derived from hops are not actively added as raw materials, when a carbonated beverage is produced. The embodiment, in which hop-derived components are unavoidably mixed upon production of a carbonated beverage, is included.

Moreover, whether or not hops and components derived from hops are actively added as raw materials for carbonated beverages can be confirmed based on the liquor tax law, the food labeling law, the food sanitation law, the JAS law, the act against unjustifiable premiums and misleading representations, the health promotion act, the terms stipulated by industry groups, or the displays of ingredients determined by voluntary standards, etc. For example, when hops and components derived from hops are comprised in a carbonated beverage, they are displayed as "hops" in the names of ingredients in the display of ingredients. In contrast, in the case of carbonated beverages that "do not substantially contain components derived from hops," the term "hops" is not displayed in the names of ingredients in the display of ingredients.

In the carbonated beverage according to one embodiment of the present invention, the content of iso-alpha acid in a beverage that "does not substantially contain components derived from hops" is 0.1 ppm by mass or less, based on the total amount (100% by mass) of the carbonated beverage. Besides, in the present description, the content of iso-alpha acid means a value measured by the high performance liquid chromatography (HPLC) analysis method described in "8.25 Iso-alpha acid" in "Revised Version Brewery Convention of Japan (BCOJ) Beer Analysis Method (published by the Brewing Society of Japan, edited by Brewers Association of Japan, Brewery Convention of Japan [Analysis Committee], and enlarged and revised in 2013)."

The total nitrogen amount in the carbonated beverage of the present invention is preferably 140 mg/100 mL or less. The "total nitrogen amount" in the present invention is the total amount of all nitrogen compounds such as proteins and amino acids.

The total nitrogen amount influences on the satisfying quality of a beverage, the thickness of a taste, taste, etc. By setting the total nitrogen amount to be a certain value or more, the satisfying quality of a beverage, the thickness of a taste, and taste can be improved. From the viewpoint of improving these factors, the total nitrogen amount in the carbonated beverage of the present invention is preferably 0.5 mg/100 mL or more, and more preferably 1 mg/100 mL or more. Moreover, the total nitrogen amount in the carbonated beverage of the present invention may also be set to be 2 mg/100 mL or more, 4 mg/100 mL or more, 7 mg/100 mL or more, 10 mg/100 mL or more, 20 mg/100 mL or more, 30 mg/100 mL or more, 40 mg/100 mL or more, 50 mg/100 mL or more, 60 mg/100 mL or more, 70 mg/100 mL or more, 80 mg/100 mL or more, 90 mg/100 mL or more, or 100 mg/100 mL or more.

On the other hand, if the total nitrogen amount is large, the taste of the beverage becomes heavy. Thus, by setting the total nitrogen amount in the beverage of the present invention to be 140 mg/100 mL or less, the taste can be lightened. From the viewpoint of further improving the taste of the beverage, the total nitrogen amount is preferably 130 mg/100 mL or less, more preferably 125 mg/100 mL or less, and further preferably 120 mg/100 mL or less. Moreover, the total nitrogen amount in the carbonated beverage of the present invention may also be set to be 115 mg/100 mL or less, 110 mg/100 mL or less, or 105 mg/100 mL or less.

The total nitrogen amount in the carbonated beverage of the present invention can be adjusted by determining, as appropriate, addition of a diluting solution or carbonated water, the types of raw materials (malts, corn grits, a sugar solution, etc.), the amounts of the raw materials, the type of an enzyme, the additive amount of the enzyme (including proteolytic enzyme, etc.), the temperature applied upon an enzymatic reaction, the timing of adding the enzyme, the proteolysis time in a preparation tank, the pH in the preparation tank, the temperature in the preparation tank, the pH in a preparation step (a wort-producing step after addition of the malts and before addition of the yeast), the temperature applied in the preparation step, and filtration conditions, such as the temperature upon filtration of a wort, the time for wort filtration, the pH applied upon wort filtration, the amount of sparging water used upon wort filtration, the preset temperature in each temperature range and retention time during preparation of a wort, the boiling time and pH in a boiling step, the concentration of an original extract in a pre-fermentation solution, the concentration of an original extract in a fermentation step, fermentation conditions (an oxygen concentration, aeration conditions, the variety of the yeast, the additive amount of the yeast, the number of proliferating yeast cells, the timing of removing the yeast, a fermentation temperature, a fermentation time, pressure setting, a carbon dioxide concentration, etc.), and the like.

When beer brewing equipment such as a preparation tank or a fermentation tank is not used, the total nitrogen amount can be adjusted by determining, as appropriate, the time applied in the production step (a preparation time attended with the mixing of raw materials, etc.), the temperature applied in the production step, the pH applied in the production step, the concentration of an original extract in the production step, etc., as well as addition of a dilution solution or carbonated water, and selection of the used amounts or types of raw materials.

For example, the total nitrogen amount in the carbonated beverage of the present invention can be controlled by adjusting the used amounts of raw materials, in which the nitrogen content is relatively high and which can be assimilated by yeasts. Specifically, by increasing the used amount of malts having a high content of nitrogen, the total nitrogen amount can be increased. Examples of such raw materials having a high content of nitrogen may include malts, soybeans, yeast extracts, peas, ungerminated grains, collagens, collagen peptides, and yeast extracts. Examples of the ungerminated grains may include ungerminated barley, wheat, rye, wild oats, oats, adlay, *Avena sativa,* soybeans, and peas.

The total nitrogen amount in the carbonated beverage according to the present invention can be measured, for example, by the method described in "8.9 Total nitrogen" in "Revised Version Brewery Convention of Japan (BCOJ) Beer Analysis Method (published by the Brewing Society of Japan, edited by Brewers Association of Japan, Brewery Convention of Japan [Analysis Committee], and enlarged and revised in 2013)."

The total polyphenol amount in the carbonated beverage of the present invention is preferably 200 ppm by mass or less.

Polyphenol is a compound in which two or more hydrogens of aromatic hydrocarbon are substituted with hydroxyl groups. Examples of such polyphenol may include flavonol, isoflavone, tannin, catechin, quercetin, and anthocyanin.

The "total polyphenol amount" in the present invention is the total amount of polyphenols contained in the carbonated beverage.

The total polyphenol amount influences on the satisfying quality of a beverage, the thickness of a taste, taste, etc. By setting the total polyphenol amount to be a certain value or more, the satisfying quality of a beverage, the thickness of a taste, and taste can be improved. From the viewpoint of improving these factors, the total polyphenol amount in the carbonated beverage of the present invention is preferably 1 ppm by mass or more, and more preferably 2 ppm by mass or more. Moreover, the total polyphenol amount in the carbonated beverage of the present invention may also be set to be 3 ppm by mass or more, 5 ppm by mass or more, 7 ppm by mass or more, 10 ppm by mass or more, 20 ppm by mass or more, 30 ppm by mass or more, 40 ppm by mass or more, 50 ppm by mass or more, 60 ppm by mass or more, 70 ppm by mass or more, 80 ppm by mass or more, 90 ppm by mass or more, or 100 ppm by mass or more.

On the other hand, in the case of a beverage in which the total polyphenol amount is large, turbidity stability decreases, and also, the taste of the beverage becomes heavy. Thus, by setting the total polyphenol amount in the beverage of the present invention to be 200 ppm by mass or less, the turbidity stability and taste of the beverage can be improved. From the viewpoint of further improving these factors, the total polyphenol amount is preferably 190 ppm by mass or less, more preferably 180 ppm by mass or less, further preferably 170 ppm by mass or less, and particularly preferably 163 ppm by mass or less. Moreover, the total polyphenol amount in the carbonated beverage of the present invention may also be set to be 150 ppm by mass or less, 140 ppm by mass or less, 130 ppm by mass or less, 120 ppm by mass or less, 110 ppm by mass or less, or 100 ppm by mass or less.

The total polyphenol amount in the carbonated beverage of the present invention can be adjusted by determining, as appropriate, addition of a diluting solution or carbonated water, the types of raw materials (raw materials containing polyphenol, such as malts), the amounts of the raw materials, the type of an enzyme, the additive amount of the enzyme, the timing of adding the enzyme, the pH in a preparation tank, the pH in a preparation step (a wort-producing step after addition of the malts and before addition of the yeast), the time for wort filtration, the preset temperature in each temperature range and retention time during preparation of a wort (including during saccharification), the concentration of an original extract in a pre-fermentation solution, the concentration of an original extract in a fermentation step, fermentation conditions (an oxygen concentration, aeration conditions, the variety of the yeast, the additive amount of the yeast, the number of proliferating yeast cells, the timing of removing the yeast, a fermentation temperature, a fermentation time, pressure setting, a carbon dioxide concentration, etc.), and the like.

When beer brewing equipment such as a preparation tank or a fermentation tank is not used, the total polyphenol amount can be adjusted by determining, as appropriate, the time applied in the production step (a preparation time attended with the mixing of raw materials, etc.), the temperature applied in the production step, the pH applied in the production step, the concentration of an original extract in the production step, etc., as well as addition of a dilution solution or carbonated water, and selection of the used amounts or types of raw materials.

Moreover, the total polyphenol amount in the carbonated beverage of the present invention can be controlled by adjusting the used amounts of raw materials in which the polyphenol content is high, such as, for example, barley malts or the husks (rhytidomes) of malts. Specifically, by increasing the used amounts of raw materials having a high content of polyphenol, including grain raw materials such as wheats or malts, tea raw materials such as green tea, barley tea, black tea or oolong tea, coffee raw materials such as coffee beans, and other raw materials such as pericarps, fruits or seeds, the total polyphenol amount can be increased.

In general, in malts having husks (rhytidomes) and the like, the contents of nitrogen and polyphenol are high. On the other hand, in soybeans, yeast extracts, wheats, wheat malts and the like, the content of nitrogen is high, but the content of polyphenol is low. Hence, by adjusting the mixing ratio of raw materials, the total nitrogen amount and the total polyphenol amount in the carbonated beverage can be increased or decreased. Representative methods (1) to (4) of increasing or decreasing the total nitrogen amount and the total polyphenol amount are as described below.
(1) The total nitrogen amount and the total polyphenol amount in the carbonated beverage are increased by increasing the used amounts of malts having husks and the like.
(2) By increasing or decreasing the used amounts of soybeans, yeast extracts and the like, the total nitrogen amount in the carbonated beverage is increased or decreased, while maintaining the total polyphenol amount.
(3) By increasing the used amounts of malts having husks and the like, and also by decreasing the used amounts of soybeans, yeast extracts and the like, the total polyphenol amount is increased, while maintaining the total nitrogen amount.
(4) By decreasing the used amounts of malts having husks and the like, and also by increasing the used amounts of soybeans, yeast extracts and the like, the total polyphenol amount is decreased, while maintaining the total nitrogen amount.

The total polyphenol amount in the carbonated beverage of the present invention can be measured, for example, by the method described in "8.19 Total Polyphenol" in "Revised Version Brewery Convention of Japan (BCOJ) Beer Analysis Method (published by the Brewing Society of Japan, edited by Brewers Association of Japan, Brewery Convention of Japan [Analysis Committee], and enlarged and revised in 2013)."

The carbonated beverage of the present invention comprises 2-methyl-2-pentenoic acid, and the content of the 2-methyl-2-pentenoic acid is 30 to 10500 ppb by mass.

Since 2-methyl-2-pentenoic acid gives a throat-stimulating property to a carbonated beverage, there can be provided a carbonated beverage having a moderate stimulation to the throat, without excessively increasing the content of carbonic acid. In particular, a specific bitterness derived from hops is hardly felt from a carbonated beverage, in which the content of iso-alpha acid is 0.1 ppm by mass or less, and a malt flavor is significantly felt from a carbonated beverage, in which the total nitrogen amount and the total polyphenol amount are certain values or more. Thus, when such a carbonated beverage comprises a certain amount of 2-methyl-2-pentenoic acid, a moderate stimulation can be effectively given to the throat. Hence, the content of 2-methyl-2-pentenoic acid in the carbonated beverage of the present invention is preferably 5 ppb by mass or more, more preferably 10 ppb by mass or more, even more preferably 15 ppb by mass or more, further preferably 20 ppb by mass or more, still further preferably 25 ppb by mass or more, still further preferably 30 ppb by mass or more, still further preferably 35 ppb by mass or more, still further preferably 40 ppb by mass or more, still further preferably 45 ppb by mass or more, and particularly preferably 48 ppb by mass or more. In addition, the content of 2-methyl-2-pentenoic acid in the carbonated beverage of the present invention may also set to be 80 ppb by mass or more, 100 ppb by mass or more, 200 ppb by mass or more, 300 ppb by mass or more, or 400 ppb by mass or more.

On the other hand, from the viewpoint of achieving a carbonated beverage in which unsuitable astringency is suppressed, the content of 2-methyl-2-pentenoic acid in the beverage of the present invention is preferably 10400 ppb by mass or less, more preferably 10300 ppb by mass or less, further preferably 10200 ppb by mass or less, and still further preferably 10100 ppb by mass or less.

The content of 2-methyl-2-pentenoic acid in the carbonated beverage of the present invention may also be set to be 80 ppb by mass or more, 8000 ppb by mass or less, 6000 ppb by mass or less, 4000 ppb by mass or less, 2000 ppb by mass or less, or 1000 ppb by mass or less.

The content of 2-methyl-2-pentenoic acid in the carbonated beverage of the present invention can be controlled, for example, by adding 2-methyl-2-pentenoic acid, or by adjusting the used amounts of raw materials in which the content of 2-methyl-2-pentenoic acid is high.

Besides, the carbonated beverage of the present invention may comprise organic acids other than 2-methyl-2-pentenoic acid.

The content of 2-methyl-2-pentenoic acid in the carbonated beverage of the present invention can be measured, for example, by gas chromatography-mass spectrometry (m/z 114).

The carbonated beverage of the present invention preferably contains 800 ppm by mass or less of lactic acid.

The content of lactic acid in the carbonated beverage of the present invention is preferably 800 ppm by mass or less, more preferably 750 ppm by mass or less, further preferably 700 ppm by mass or less, still further preferably 650 ppm by mass or less, and particularly preferably 600 ppm by mass or less. On the other hand, the content of lactic acid in the carbonated beverage of the present invention is preferably 10 ppm by mass or more, more preferably 50 ppm by mass or more, further preferably 80 ppm by mass or more, still further preferably 90 ppm by mass or more, and particularly preferably 100 ppm by mass or more. The content of lactic acid may also be set to be 150 ppm by mass or more, 180 ppm by mass or more, 200 ppm by mass or more, 250 ppm by mass or more, 300 ppm by mass or more, 350 ppm by mass or more, 400 ppm by mass or more, or 450 ppm by mass or more.

Besides, the content of lactic acid in the carbonated beverage of the present invention can be measured, for example, by high performance liquid chromatography.

The carbonated beverage of the present invention preferably contains 500 ppm by mass or less of phosphoric acid.

The content of phosphoric acid in the carbonated beverage of the present invention is preferably 500 ppm by mass or less, more preferably 450 ppm by mass or less, even more preferably 400 ppm by mass or less, further preferably 350 ppm by mass or less, still further preferably 300 ppm by mass or less, still further preferably 250 ppm by mass or less, and particularly preferably 200 ppm by mass or less. On the other hand, the content of phosphoric acid in the carbonated beverage of the present invention is preferably 5 ppm by mass or more, more preferably 10 ppm by mass or more, even more preferably 30 ppm by mass or more, further preferably 50 ppm by mass or more, still further preferably 70 ppm by mass or more, still further preferably 100 ppm by mass or more, and particularly preferably 120 ppm by mass or more.

Besides, the content of phosphoric acid in the carbonated beverage of the present invention can be measured, for example, by high performance liquid chromatography.

The content of ethanol in the carbonated beverage of the present invention is less than 1.0 (v/v)%, but it may also be 0.9 (v/v)% or less, 0.8 (v/v)% or less, 0.7 (v/v)% or less, 0.6 (v/v)% or less, 0.5 (v/v)% or less, 0.4 (v/v)% or less, 0.3 (v/v)% or less, 0.2 (v/v)% or less, 0.1 (v/v)% or less, or 0.0 (v/v)%. On the other hand, the content of ethanol may also be more than 0.0 (v/v)%, 0.1 (v/v)% or more, 0.2 (v/v)% or more, 0.3 (v/v)% or more, 0.4 (v/v)% or more, or 0.5 (v/v)% or more.

Besides, in the present description, the content of ethanol is indicated with the percentage (v/v)% of volume/volume basis. In addition, the content of alcohol in the beverage can be measured by all of known methods, and it can be measured, for example, using an oscillatory density meter.

The color of the container-packed carbonated beverage according to one embodiment of the present invention is not particularly limited. The container-packed carbonated beverage according to one embodiment of the present invention may have an amber or golden color, such as the colors of a beer, or may have a black color such as the color of a black beer, or may also be colorless and transparent. Otherwise, a desired color may be imparted to the container-packed carbonated beverage by adding a coloring agent or the like thereto. The color of the carbonated beverage can be determined with the unaided eye, but it may also be determined using total light transmittance, chromaticity, etc.

From the viewpoint of achieving a beverage in which the risk of proliferation of microorganisms is reduced and a flavor is improved, the pH of the container-packed carbonated beverage according to one embodiment of the present invention is preferably pH 2.0 to 4.6, more preferably pH 2.5 to 4.5, further preferably pH 3.0 to 4.2, and particularly preferably pH 3.2 to 4.0, 3.3 to 3.9, 3.4 to 3.9, or 3.5 to 3.9.

The pH of the beer-taste beverage can be adjusted by determining, as appropriate, addition of a diluting solution or carbonated water, the types of raw materials (malts, corn grits, a sugar solution, etc.), the amounts of the raw materials, the type of an enzyme, the additive amount of the enzyme, the timing of adding the enzyme, the saccharification time in a preparation tank, the proteolysis time in the preparation tank, the pH in the preparation tank, the pH in a preparation step (a wort-producing step after addition of the malts and before addition of the yeast), the type of an acid used upon the pH adjustment (lactic acid, phosphoric acid, malic acid, tartaric acid, citric acid, etc.), the additive amount of an acid used upon the pH adjustment, the timing of the pH adjustment (at the time of preparation, during fermentation, at completion of the fermentation, before beer filtration, after beer filtration, etc.), the preset temperature in each temperature range and retention time during preparation of a wort (including during saccharification), the concentration of an original extract in a pre-fermentation solution, the concentration of an original extract in a fermentation step, fermentation conditions (an oxygen concentration, aeration conditions, the variety of the yeast, the additive amount of the yeast, the number of proliferating yeast cells, the timing of removing the yeast, a fermentation temperature, a fermentation time, pressure setting, a carbon dioxide concentration, etc.), and the like.

When beer brewing equipment such as a preparation tank or a fermentation tank is not used, pH can be adjusted by determining, as appropriate, the time applied in the production step (a preparation time attended with the mixing of raw materials, etc.), the temperature applied in the production step, the pH applied in the production step, the concentration of an original extract in the production step, etc., as well as addition of a diluting solution or carbonated water, addition of minerals (sodium, salts, potassium salts, calcium salts, magnesium salts, etc.), addition of water containing minerals, and selection of the used amount or type of an acidulant and the used amounts or types of raw materials.

The pH of the carbonated beverage according to the present invention can be measured by the method described in "8.7 pH" in "Revised Version Brewery Convention of Japan (BCOJ) Beer Analysis Method (published by the Brewing Society of Japan, edited by Brewers Association of Japan, Brewery Convention of Japan [Analysis Committee], and enlarged and revised in 2013)."

Optional additive raw materials that can be used in production of the carbonated beverage of the present invention, such as grains and sweeteners, will be described in detail in "1.1 Raw materials" below.

### 1.1 Raw materials

Raw materials for the carbonated beverage of the present invention are not particularly limited, as long as the finally obtained carbonated beverage contains 300 to 10500 ppb by mass of 2-methyl-2-pentenoic acid.

As 2-methyl-2-pentenoic acid contained in the container-packed carbonated beverage according to one embodiment of the present invention, 2-methyl-2-pentenoic acid contained in the raw materials may be utilized, or 2-methyl-2-pentenoic acid or an additive containing 2-methyl-2-pentenoic acid may be added. Otherwise, 2-methyl-2-pentenoic acid generated in a brewing step may also be utilized.

Examples of a preservative used herein may include: benzoic acid; benzoates such as sodium benzoate; benzoic acid esters such as propyl parahydroxy-benzoate and butyl parahydroxy-benzoate; and dimethyl dicarbonate. Moreover, as such preservatives, commercially available preparations, such as Strong SANPRESER (manufactured by San-Ei Gen F.F.I., Inc.; a mixture of sodium benzoate and butyl benzoate), may also be used. These preservatives may be used alone or may also be used in combination of two or more types.

The mixed amount of such a preservative is preferably 5 to 1200 ppm by mass, more preferably 10 to 1100 ppm by mass, further preferably 15 to 1000 ppm by mass, and still further preferably 20 to 900 ppm by mass.

Examples of the sweetener used herein may include commercially available saccharified solution obtained by decomposing grain-derived starch with an acid, an enzyme or the like, commercially available sugars such as starch syrup, sugar that is trisaccharide or more, sugar alcohol, natural sweeteners such as stevia, and artificial sweeteners.

The form of these sugars may be either a liquid such as a solution, or a solid such as powders.

Moreover, the types of raw material grains for starch, the method of purifying starch, and treatment conditions, such as hydrolysis with an enzyme or an acid, are not particularly limited. For example, conditions for hydrolysis with an enzyme or an acid are determined, as appropriate, so that sugars in which the ratio of maltose is increased may be used. Furthermore, sucrose, fructose, glucose, maltose, trehalose, maltotriose, a solution thereof (i.e. a sugar solution) and the like can also be used.

Further, examples of the artificial sweetener may include aspartame, acesulfame potassium (acesulfame K), sucralose, and neotame.

Examples of the water-soluble dietary fibers may include indigestible dextrin, polydextrose, partially hydrolyzed guar gum, pectin, glucomannan, alginic acid, laminarin, fucoidin, and carrageenan. From the viewpoint of versatility such as stability and safety, indigestible dextrin or polydextrose is preferable.

In the carbonated beverage according to one embodiment of the present invention, bitterness is preferably imparted with hops or a hop extract formed by isomerization of alpha acid. Together with such hops or such a hop extract formed by isomerization of alpha acid, the following bittering agents or bitterness-imparting agents may be used. Otherwise, the following bittering agents or bitterness-imparting agents may be used without using such hops and such a hop extract formed by isomerization of alpha acid.

Examples of the bittering agent or the bitterness-imparting agent may include *Ganoderma lucidum, Litchi chinensis, Carum carvim,* juniper fruit, sage, rosemary, reishi mushroom, laurel, quasin, citrus extract, *Picrasma quassioides* extract, coffee extract, tea extract, bitter melon extract, lotus germ extract, *Aloe arborescens* extract, *Ganoderma lucidum* extract, *Litchi chinensis* extract, laurel extract, sage extract, caraway extract, naringin, *Artemisia absinthium,* and *Artemisia absinthium* extract.

The antioxidant is not particularly limited, and the substances used as antioxidants in an ordinary beer or a low-malt beer can be used. Examples thereof may include ascorbic acid, erythorbic acid, and catechin.

The flavor is not particularly limited, and a common beer flavor can be used. Such a beer flavor is used to add a beer-like flavor to beverages, and the beer flavor contains brewed components generated by fermentation, and the like. Specific examples of the beer flavor may include esters and higher alcohols. Further specific examples of the beer flavor may include isoamyl acetate, ethyl acetate, n-propanol, isobutanol, acetaldehyde, ethyl caproate, linalool, 4-vinylguaiacol, isoamyl propionate, 4-methyl-3-pentenoic acid, methional, furfural, and furaneol.

These flavors may be used alone, or may also be used in combination of two or more types.

In the carbonated beverage of the present invention, an acidulant other than the aforementioned lactic acid and phosphoric acid may be used.

The acidulant other than the aforementioned lactic acid and phosphoric acid is not particularly limited, as long as it is a substance having a sourness. Examples of such an acidulant may include tartaric acid, citric acid, gluconic acid, malic acid, phytic acid, acetic acid, succinic acid, glucono delta lactone, and salts thereof.

Among these acidulants, tartaric acid, citric acid, gluconic acid, malic acid, phytic acid, acetic acid, succinic acid, and salts thereof are preferable, and tartaric acid, citric acid, acetic acid, and salts thereof are more preferable.

These acidulants may be used alone, or may also be used in combination of two or more types.

Main raw materials for the carbonated beverage according to one embodiment of the present invention are malts containing nitrogen, polyphenol and the like, hops, and water. Other than these raw materials, a preservative, a sweetener, water-soluble dietary fibers, a bittering agent or a bitterness-imparting agent, an antioxidant, a flavor, an acidulant, and the like may also be used.

When malts are used as raw materials, the malts mean those obtained by germinating the seeds of *mugi* plants such as barley, wheat, rye, wild oats, oats, adlay, or *Avena sativa,* then drying them, and then removing roots. The production area and variety of the used malts are not particularly limited. In the present invention, barley malts are preferably used. The barley malts are one type of malts that are most commonly used as raw materials of beer-taste beverages in Japan. Barley has several types such as two-row barley and six-row barley. All types of barley may be used. Further, in addition to common malts, colored malts and the like can also be used. When such colored malts are used, different types of colored malts may be appropriately used in combination, or only one type of colored malts may also be used.

Moreover, together with malts, grains other than the malts, proteins, yeast extracts, sugar solutions, and the like may also be used. Examples of such grains may include *mugi* that does not correspond to malts (e.g. barley, wheat, rye, wild oats, oats, adlay, *Avena sativa,* etc.), rice (e.g. white rice, brown rice, etc.), corn, kaoliang, potato, beans (e.g. soybeans, garden peas, etc.), buckwheat, sorghum, foxtail millet, barnyard millet, starches obtained from these grains, and extracts thereof. In addition, examples of the proteins may include soybean proteins, pea proteins, yeast extracts, and decomposition products thereof.

When malts are not used as raw materials, liquid sugar containing a carbon source, and a nitrogen source serving as an amino acid-containing material (e.g. a soybean protein, etc.), such as the aforementioned grains other than malts, is used in the carbonated beverage.

Malts contain a nitrogen compound and polyphenol. Accordingly, in the present invention, in order to adjust the total nitrogen amount and the total polyphenol amount in the carbonated beverage of the present invention within a certain range specified in the present invention, the percentage of the malts in the raw materials is preferably set to be in a certain range. Specifically, the percentage of the malts is preferably 1% by mass or more, more preferably 3% by mass or more, and further preferably 4% by mass or more. By setting the percentage of the malts within the above-described range, a carbonated beverage having a taste suitable for beers that is derived from malts can be produced. In addition, the percentage of the malts in the carbonated beverage of the present invention may also be 10% by mass or more, 20% by mass or more, or 30% by mass or more.

On the other hand, the percentage of the malts in the carbonated beverage of the present invention is preferably 90% by mass or less, more preferably 80% by mass or less, and further preferably 75% by mass or less. In addition, the percentage of the malts in the carbonated beverage of the present invention may also be 65% by mass or less, 60% by mass or less, 55% by mass or less, or 50% by mass or less.

In the present description, the percentage of the malts means a value calculated in accordance with the Notification of the Interpretation of the Liquor Tax Law and Other Laws and Orders relating to the Administration of Liquor Affairs (date of enforcement: April 1, 2018).

When the percentage of the malts is to be suppressed, it is preferable to increase the amounts of raw materials other than the malts which can be assimilated by yeasts (i.e. a carbon source and a nitrogen source). Examples of the carbon source as a raw material, which can be assimilated by yeasts, may include monosaccharide, disaccharide, trisaccharide, and sugar solutions thereof. Examples of the nitrogen source as a raw material, which can be assimilated by yeasts, may include yeast extracts, soybean proteins, malts, soybeans, yeast extracts, peas, wheat malts, ungerminated grains, and decomposition products thereof. Examples of the ungerminated grains may include ungerminated barley, wheat, rye, wild oats, oats, adlay, *Avena sativa,* soybeans, and peas. In particular, if sugars are used as raw materials, a malt-derived *mugi* flavor can be effectively suppressed.

### 1.2 Carbon dioxide gas

As carbon dioxide gas contained in the container-packed carbonated beverage according to one embodiment of the present invention, carbon dioxide gas contained in the raw materials may be utilized, or carbon dioxide gas may be dissolved in the beverage by the mixing of the beverage with carbonated water, addition of carbon dioxide gas to the beverage, and the like.

The concentration of carbon dioxide gas in the beer-taste beverage according to one embodiment of the present invention is preferably 0.30 (w/w)% or more, more preferably 0.35 (w/w)% or more, even more preferably 0.40 (w/w)% or more, further preferably 0.42 (w/w)% or more, still further preferably 0.45 (w/w)% or more, still further preferably 0.46 (w/w)% or more, still further preferably 0.47 (w/w)% or more, and particularly preferably 0.48 (w/w)% or more. On the other hand, the concentration of carbon dioxide gas in the beer-taste beverage according to one embodiment of the present invention is preferably 0.80 (w/w)% or less, more preferably 0.70 (w/w)% or less, even more preferably 0.65 (w/w)% or less, further preferably 0.60 (w/w)% or less, still further preferably 0.59 (w/w)% or less, still further preferably 0.58 (w/w)% or less, still further preferably 0.57 (w/w)% or less, still further preferably 0.56 (w/w)% or less, and particularly preferably 0.55 (w/w)% or less.

Besides, in the present description, the concentration of the carbon dioxide gas can be measured by immersing a container containing the beverage as a target in a water tank at 20°C for 30 minutes or more, while shaking the container sometimes, so that the temperature of the beverage is adjusted to 20°C, and then measuring the carbon dioxide gas concentration using a gas volume measuring device (for example, GVA-500 (manufactured by KYOTO ELECTRONICS MANUFACTURING CO., LTD.), etc.).

The amount of the carbon dioxide gas contained in the container-packed carbonated beverage according to one embodiment of the present invention is indicated with the carbon dioxide gas pressure of the beverage. The amount of the carbon dioxide gas is 0.10 to 5.0 kg/cm². The upper limit of the carbon dioxide gas pressure may be 4.8 kg/cm², 4.5 kg/cm², or 4.0 kg/cm², and the lower limit of the carbon dioxide gas pressure may be 0.20 kg/cm², 0.50 kg/cm², or 1.0 kg/cm². Moreover, the amount of the carbon dioxide gas contained in the container-packed carbonated beverage according to one embodiment of the present invention may bet set to be 5.0 kg/cm² or less, 4.5 kg/cm² or less, or 4.0 kg/cm² or less. On the other hand, the amount of the carbon dioxide gas contained in the container-packed carbonated beverage according to one embodiment of the present invention may also bet set to be 0.20 kg/cm² or more, 0.50 kg/cm² or more, or 1.0 kg/cm² or more. Besides, these upper limits and lower limits may be combined with one another in any ways, and for example, the carbon dioxide gas pressure of the beverage may be 0.20 kg/cm² or more and 5.0 kg/cm² or less, 0.50 kg/cm² or more and 4.5 kg/cm² or less, or, 1.0 kg/cm² or more and 4.0 kg/cm² or less.

Since the container-packed carbonated beverage of the present invention contains 2-methyl-2-pentenoic acid, there can be provided a beverage giving stimulation to the throat without setting the gas pressure (content) of carbon dioxide gas to be higher than as usual.

In the present description, the gas pressure means a gas pressure in a container, unless otherwise specified.

The pressure can be measured by a method well known to those skilled in the art, and for example, the pressure can be measured by applying a method comprising fixing a sample set at 20°C in a gas pressure gauge, then once opening the stopper cock of the gas pressure gauge to discharge gas, then closing the stopper cock again, then shaking the gas pressure gauge, and then reading the value when the indicator reaches a predetermined position, or by using a commercially available gas pressure measurement device.

### 1.3 Other additives

The container-packed beverage according to one embodiment of the present invention may comprise various additives, as necessary, in a range in which the additives do not impair the effects of the present invention.

Examples of such additives may include coloring agents, foaming agents, fermentation promoters, yeast extracts, protein substances such as peptide-containing matters, and condiments such as amino acids.

The coloring agent is used to impart a beer-like color to the beverage, and a caramel coloring or the like can be used. The foaming agent is used to form beer-like foams for the beverage, or to retain the foams of the beverage. Examples of the foaming agent that can be appropriately used herein may include: plant-extracted saponin substances such as soybean saponin and quillaja saponin; vegetable proteins of corns, soybeans, and the like; peptide-containing matters such as collagen peptides; and yeast extracts.

The fermentation promoter is used to promote fermentation with yeasts. For example, yeast extracts, bran ingredients of rice, *mugi,* and the like, vitamins, and mineral agents can be used alone or in combination.

### 1.4 Container-packed beverage

For the container-packed carbonated beverage according to one embodiment of the present invention, containers having any forms and/or being made of any materials may be used. Examples of the container, into which the container-packed carbonated beverage according to one embodiment of the present invention is filled, may include bottles, plastic bottles, cans, and barrels. From the viewpoint of, in particular, the ease of carrying, cans, bottles and plastic bottles are preferable.

Besides, when a colorless transparent bottle or plastic bottle is used as a container, differing from the case of an ordinary can or a colored bottle, the beverage contained in the container is exposed to sunlight or fluorescent light. However, since the container-packed carbonated beverage according to one embodiment of the present invention does not substantially contain components derived from hops, generation of a sun flavor caused by irradiation with a sunlight is suppressed. Thus, the container-packed carbonated beverage according to one embodiment of the present invention can be filled into such a colorless transparent bottle or plastic bottle.

### 2. Method for producing carbonated beverage

The method for producing a container-packed carbonated beverage of the present invention is not particularly limited, and it is, for example, a method comprising the following Steps (1) to (3).
- Step (1): a step of performing at least one treatment of a saccharification treatment, a boiling treatment and a solid-removing treatment, using various types of raw materials, so as to obtain a pre-beverage solution.
- Step (2): a step of adding carbon dioxide gas to the pre-beverage solution.
- Step (3): a step of adjusting the content of 2-methyl-2-pentenoic acid.

The above-described individual steps will be described below.

### < Step (1) >

Step (1) is a step of performing at least one treatment of a saccharification treatment, a boiling treatment and a solid-removing treatment, using various types of raw materials, so as to obtain a pre-beverage solution.

For example, when malts are used as various types of raw materials, various types of raw materials including water and malts are added into a preparation pot or a preparation tank, and enzymes such as amylase are added, as necessary. Various types of raw materials other than the malts that may be added herein may include dietary fibers, sweeteners, antioxidants, bitterness-imparting agents, flavors, acidulants, and pigments.

A mixture of various types of raw materials is heated, and starchy materials in the raw materials are saccharified, so as to carry out a saccharification treatment. The temperature and the time applied in the saccharification treatment are adjusted, as appropriate, depending on the types of malts used, the percentage of malts, raw materials other than water and malts, etc. Filtration is carried out after completion of the saccharification treatment, so as to obtain a saccharified solution.

Besides, this saccharified solution is preferably subjected to a boiling treatment.

When bittering agents, etc. are used as raw materials, these substances are preferably added in this boiling treatment. The bittering agents, etc. may be added at a timing between initiation of the boiling of the saccharified solution and before termination of the boiling.

Thereafter, a solid-removing treatment is carried out in a clarification tank in order to remove solids such as coagulated proteins from the saccharified solution. Thus, a pre-beverage solution is obtained.

Otherwise, instead of the above-described saccharified solution, bittering agents, etc. may be added into a malt extract to which hot water has been added, and a boiling treatment may be then carried out to prepare a pre-beverage solution.

On the other hand, when malts are not used as various types of raw materials, liquid sugar containing a carbon source, a nitrogen source serving as an amino acid-containing raw material other than *mugi* or malts, dietary fibers, sweeteners, antioxidants, bitterness-imparting agents, flavors, acidulants, pigments, etc. may be mixed with hot water to prepare a liquid sugar solution, and a boiling treatment may be then carried out on the liquid sugar solution, thereby preparing a pre-beverage solution.

In the case of using hops, such hops may be added before performing the boiling treatment, or may also be added at the timing between initiation of the boiling of the liquid sugar solution and before termination of the boiling.

Besides, after completion of the Step (1), a fermentation step using a yeast is carried out, and thereafter, a step of removing alcohol generated by the fermentation step, so as to obtain a fermented beverage, in which the ethanol concentration is set to be less than 1.0 (v/v)%, more preferably less than 0.1 (v/v)%, even more preferably less than 0.01 (v/v)%, and further preferably less than 0.005 (v/v)%, is carried out, so that a carbonated beverage may be produced.

On the other hand, the production method according to one embodiment of the present invention may also be a method, in which the above-described fermentation step and step of removing alcohol are not carried out.

### < Step (2) >

Step (2) is a step of adding carbon dioxide gas to the above-described pre-beverage solution.

As a method of adding carbon dioxide gas, a known method applied upon the production of a carbonated beverage can be used. Using such a known method, it is preferable to adjust the carbon dioxide gas pressure to be in the aforementioned range.

### < Step (3) >

Step (3) is a step of adjusting the content of 2-methyl-2-pentenoic acid.

Step (3) may be carried out at any timing of, before or after the saccharification treatment, before or after the boiling treatment, and before or after the solid-removing treatment in Step (1), or may also be carried out before or after Step (2) performed after completion of the Step (1). However, from the viewpoint of precisely adjusting the content of 2-methyl-2-pentenoic acid in the finally produced beverage, Step (3) is preferably carried out after completion of Step (1) and before initiation of Step (2).

In Step (3), it is preferable that the content of 2-methyl-2-pentenoic acid in the beverage before adjustment is measured, and based on the measured value, these components are each added, or water is added to the beverage to dilute it, so that the contents of individual components are adjusted to be in the aforementioned range. Besides, when the content of 2-methyl-2-pentenoic acid has already been in a desired range because of the presence of 2-methyl-2-pentenoic acid derived from the raw materials in the beverage before adjustment, the operation of adding 2-methyl-2-pentenoic acid or adding water to the beverage to dilute it according to the present step is unnecessary.

After completion of these steps, the steps performed in the production of a beer-taste beverage that are well known to those skilled in the art, such as a liquor storage step and a filtration step, may be carried out.

The thus obtained container-packed carbonated beverage according to one embodiment of the present invention is filled in a predetermined container, and is distributed as a product to the market.

The method of filling the beverage in a container is not particularly limited, and a method of filling a beverage in a container that is well known to those skilled in the art can be applied. By performing a step of filling the beverage in a container, the carbonated beverage of the present invention is filled and hermetically sealed in the container. In such a step of filling the beverage in a container, containers having any forms and/or being made of any materials may be used, and examples of such a container may include those described in the above "1.4 Container-packed beverage."

### Examples

Hereinafter, the present invention will be described in more detail in the following Examples, etc. However, these examples are not intended to limit the scope of the present invention.

### < Preparation of beverages >

Water, hops and malts were used as raw materials, and these raw materials were subjected to a saccharification treatment to obtain a wort. A fermentation step using a yeast was not performed on the obtained wort, and 2-methyl-2-pentenoic acid, lactic acid, phosphoric acid, and carbon dioxide gas were added to the wort, so that the contents shown in Table 1 could be obtained.

The contents of lactic acid, phosphoric acid, carbon dioxide gas, and 2-methyl-2-pentenoic acid in the thus obtained beer-taste beverage were those as shown in Table 1. In addition, the content of ethanol in these beverages was 0.00 (v/v)%.

### < Sensory evaluation >

### Evaluation of "stimulation to the throat suitable for carbonated beverages" and "astringency as an aftertaste unsuitable for carbonated beverages" in beer-taste beverages

The same 4 panelists tasted the obtained beer-taste beverages and evaluated as follows.

Individual panelists tasted beer-taste beverages cooled to about 4°C. Thereafter, with regard to the "stimulation to the throat suitable for carbonated beverages" and the "astringency as an aftertaste unsuitable for carbonated beverages," evaluation was carried out based on the following score criteria, with scores in 0.1 steps in the range of 3.0 (maximum value) to 1.0 (minimum value), and the mean value of the scores given by the 4 panelists was then calculated. The results are shown in Table 1 and Table 2.

For the evaluation, samples whose "stimulation to the throat suitable for carbonated beverages" corresponded to the following criteria "1," "2," and "3," and samples whose "astringency as an aftertaste unsuitable for carbonated beverages" corresponded to the following criteria "1," "2," and "3," had previously been prepared, and thus, the standards among individual panelists were intended to be unified. Moreover, in all of the sensory evaluations shown in Table 1, a score value difference of 2.0 or more was not found among individual panelists, with respect to an identical beverage.

### [Stimulation to the throat suitable for carbonated beverages]

- "3": Extremely favorable.
- "2": Favorable.
- "1": Poor.

Then, based on the mean value of the scores of the 4 panelists, the stimulation to the throat suitable for carbonated beverages was evaluated for each beverage according to the criteria, and a beverage having a score of 2.0 or more was determined to be satisfactory.

### [Astringency as an aftertaste unsuitable for carbonated beverages]

- "3": Not felt.
- "2": Hardly felt.
- "1": Felt.

Then, based on the mean value of the scores of the 4 panelists, the astringency as an aftertaste unsuitable for carbonated beverages was evaluated for each beverage according to the criteria, and a beverage having a score of 2.0 or more was determined to be satisfactory.

### [Comprehensive evaluation]

A beverage, in which the score of the "stimulation to the throat suitable for carbonated beverages" is 2.0 or more and the score of the "astringency unsuitable for carbonated beverages" is 2.5 or more, was evaluated to be "A."

On the other hand, a beverage, in which the score of the "stimulation to the throat suitable for carbonated beverages" is less than 2.0 or the score of the "astringency unsuitable for carbonated beverages" is less than 2.5, was evaluated to be "B."

### [Table 1]

**Table 1**

| | Ex. 1 | Ex. 2 | Ex. 3 | Ex. 4 | Ex. 5 | Comp.Ex. 1 | Comp.Ex. 2 |
|---|---|---|---|---|---|---|---|
| Content of lactic acid (ppm by mass) | 500 | 500 | 500 | 500 | 500 | 500 | 500 |
| Content of phosphoric acid (ppm by mass) | 160 | 160 | 160 | 160 | 160 | 160 | 160 |
| Carbon dioxide gas (kg/cm2) | 2.30 | 2.30 | 2.30 | 2.30 | 2.30 | 2.30 | 2.30 |
| Content of 2-methyl-2-pentenoic acid (ppb by mass) | 50 | 100 | 500 | 5000 | 10000 | 0 | 11000 |
| Stimulation to throat suitable for carbonated beverages | 2.0 | 2.2 | 3.0 | 2.8 | 2.5 | 1.5 | 2.0 |
| Astringency as aftertaste unsultable for carbonated beverages | 3.0 | 3.0 | 3.0 | 2.8 | 2.5 | 3.0 | 2.0 |
| Comprehensive evaluation | A | A | A | A | A | B | B |
| | | | | | | | |

| | Ex. 6 | Ex. 7 | Ex. 8 | Ex. 9 | Ex. 10 | Comp.Ex. 3 | Comp.Ex. 4 |
|---|---|---|---|---|---|---|---|
| Content of lactic acid (ppm by mass) | 100 | 100 | 100 | 100 | 100 | 100 | 100 |
| Content of phosphoric acid (ppm by mass) | 0 | 0 | 0 | 0 | 0 | 0 | 0 |
| Carbon dioxide gas (kg/cm2) | 2.70 | 2.70 | 2.70 | 2.70 | 2.70 | 2.70 | 2.70 |
| Content of 2-methyl-2-pentenoic acid (ppb by mass) | 50 | 100 | 500 | 5000 | 10000 | 0 | 11000 |
| Stimulation to throat suitable for carbonated beverages | 2.1 | 2.3 | 3.0 | 2.9 | 2.5 | 1.7 | 2.0 |
| Astringency as aftertatste unsuitable for carbonated beverages | 3.0 | 3.0 | 3.0 | 2.8 | 2.6 | 3.0 | 2.0 |
| Comprehensive evaluation | A | A | A | A | A | B | B |
| | | | | | | | |

| | Ex. 11 | Ex. 12 | Ex. 13 | Ex. 14 | Ex. 15 | Comp.Ex. 5 | Comp.Ex. 6 |
|---|---|---|---|---|---|---|---|
| Content of lactic acid (ppm by mass) | 250 | 250 | 250 | 250 | 250 | 250 | 250 |
| Content of phosphoric acid (ppm by mass) | 160 | 160 | 160 | 160 | 160 | 160 | 160 |
| Carbon dioxide gas (kg/cm2) | 2.00 | 2.00 | 2.00 | 2.00 | 2.00 | 2.00 | 2.00 |
| Content of 2-methyl-2-pentenoic add (ppb by mass) | 50 | 100 | 500 | 5000 | 10000 | 0 | 11000 |
| Stimulation to throat suitable for carbonated beverages | 2.0 | 2.1 | 2.8 | 2.6 | 2.3 | 1.3 | 2.0 |
| Astringency as aftertatste unsuitable for carbonated beverages | 3.0 | 3.0 | 3.0 | 2.8 | 2.5 | 3.0 | 2.0 |
| Comprehensive evaluation | A | A | A | A | A | B | B |

From the results of the Examples, it is found that a beverage, which has favorable stimulation to the throat suitable for carbonated beverages and in which astringency unsuitable for carbonated beverages is suppressed, can be provided, when the content of 2-methyl-2-pentenoic acid is adjusted to be 30 to 10500 ppb by mass in a beer-taste beverage having an ethanol content of less than 1.0 (v/v)% and a carbon dioxide gas content of 0.10 to 5.0 kg/cm².

Even in the case of a carbonated beverage having an ethanol content of less than 1.0 (v/v)% and a carbon dioxide gas content of 0.10 to 5.0 kg/cm², if the content of 2-methyl-2-pentenoic acid is too large, stimulation to the throat suitable for carbonated beverages is deteriorated, and astringency unsuitable for carbonated beverages is easily felt. On the other hand, if the content of 2-methyl-2-pentenoic acid is small, astringency unsuitable for carbonated beverages is suppressed, but stimulation to the throat suitable for carbonated beverages has tended to be deteriorated.

## Claims

1. A container-packed carbonated beverage, in which the content of ethanol is less than 1.0 (v/v)%, the content of carbon dioxide gas is 0.10 to 5.0 kg/cm², and the content of 2-methyl-2-pentenoic acid is 30 to 10500 ppb by mass.

2. The container-packed carbonated beverage according to claim 1, comprising 800 ppm by mass or less of lactic acid.

3. The container-packed carbonated beverage according to claim 1 or 2, comprising 500 ppm by mass of phosphoric acid.

4. The container-packed carbonated beverage according to any one of claims 1 to 3, wherein the pH is pH 2.5 to 4.5.

5. The container-packed carbonated beverage according to any one of claims 1 to 4, wherein the carbonated beverage is a beer-taste beverage.

6. The container-packed carbonated beverage according to any one of claims 1 to 4, wherein the carbonated beverage is a non-alcoholic beer-taste beverage.
